**Europäisches Patentamt**

**European Patent Office**

**Office européen des brevets**

(19)

(11) Veröffentlichungsnummer: **0 403 784**
**A2**

(12) ## EUROPÄISCHE PATENTANMELDUNG

(21) Anmeldenummer: **90109081.1**

(22) Anmeldetag: **14.05.90**

(51) Int. Cl.5: **B09B 3/00, B28C 5/46, E04G 23/08**

(30) Priorität: **17.06.89 DE 3919838**

(43) Veröffentlichungstag der Anmeldung:
**27.12.90 Patentblatt 90/52**

(84) Benannte Vertragsstaaten:
**CH DE FR GB LI**

(71) Anmelder: **PUTZMEISTER-WERK MASCHINENFABRIK GMBH**
**Max-Eyth-Strasse 2-38**
**D-7447 Aichtal 2(DE)**

(72) Erfinder: **Lindenau, Rudolf**
**Begasstrasse 3**
**D-1000 Berlin 3(DE)**
Erfinder: **Wütherich, Rainer**
**Heideweg 3**
**D-7447 Aichtal 2(DE)**

(74) Vertreter: **Wolf, Eckhard**
**Patentanwalt Dr.-Ing. Eckhard Wolf Postfach**
**13 10 01**
**D-7000 Stuttgart 1(DE)**

(54) **Verfahren und Vorrichtung zur Entsorgung von kontaminiertem Bauschutt.**

(57) Die Erfindung betrifft ein Verfahren und eine Vorrichtung zur Entsorgung von mit Schadstoffen, wie Asbest, kontaminierten, im Innenraum von Bauwerken auf Teilen des Bauwerks aufgetragenen Baustoffen, beispielsweise Spritzasbest. Dabei wird der Innenraum des Bauwerks hermetisch gegenüber dem Außenraum abgedichtet und unter Unterdruck gesetzt. Die mit Schadstoffen kontaminierten Baustoffe (64) werden danach stückweise von den Bauwerksteilen getrennt und der sich dabei bildende Bauschutt (70) gegebenenfalls nach vorheriger Zerkleinerung in einem Mischbehälter (12) unter Bildung eines dickflüssigen Gemischs (58) mit einem Bindemittel gemischt. Nach Abdichten gegenüber dem Innenraum (20) wird der Mischbehälter (12) zum Außenraum hin geöffnet, wo das dickflüssige Gemisch (58) nach dem Entleeren des Mischbehälters (12) unter Bildung transportierbarer Blöcke ausgehärtet wird. Erfindungsgemäß wird der im Innenraum (20) eingeschlossene Mischbehälter (12) vom Innenraum (20) her unter dem dort herrschenden oder gegenüber diesem zusätzlich abgesenkten Druck mit dem Bauschutt (70) befüllt und anschließend während und/oder nach der Bildung des dickflüssigen Gemischs (58) gegenüber dem Innenraum (20) abgedichtet und mit Druckluft beaufschlagt, wobei das dickflüssige Gemisch (58) unter der Einwirkung der Druckluft über eine den Mischbehälter (12) mit dem Außenraum verbindende Förderleitung (22) zum Aushärten in den Außenraum gefördert wird.

FIG. 1

## Verfahrenund Vorrichtung zur Entsorgung von kontaminiertem Bauschutt

Die Erfindung betrifft ein Verfahren und eine Vorrichtung zur Entsorgung von mit Schadstoffen, wie Asbest, kontaminierten, im Innenraum von Bauwerken vorzugsweise schichtweise auf Teilen des Bauwerks aufgetragenen Baustoffen, wobei der Innenraum gegenüber einem den Innenraum umgebenden Außenraum abgedichtet und vorzugsweise unter Unterdruck gesetzt wird, die kontaminierten Baustoffe sodann von den Bauwerksteilen getrennt werden, der dabei gebildete Bauschutt, gegebenenfalls nach vorheriger Zerkleinerung, in einem gegenüber dem Innenraum und dem Außenraum abdichtbaren Mischraum unter Bildung eines dickflüssigen Gemischs mit einem Bindemittel gemischt wird und das dickflüssige Gemisch aus dem Mischraum in den Außenraum entleert und vorzugsweise unter Bildung transportierbarer Blöcke ausgehärtet wird.

Asbesthaltige Baustoffe wurden noch bis vor wenigen Jahren insbesondere in Form von Feuerschutz- , Wärme-oder Schalldämmschichten auf Decken, Wänden, Rohrleitungen oder Entlüftungsschächten in Innenräumen von Bauwerken aufgebracht. Es hat sich jedoch gezeigt, daß durch Verwitterung der Oberflächen der asbesthaltigen Baustoffe laufend Asbestfasern an die Raumluft abgegeben werden. Insbesondere aus Baustoffen mit hohem Asbest- und niedrigem Bindemittelanteil, wie Spritzasbest, wird so viel Asbest freigesetzt, daß in der Raumluft der Gehalt an gesundheitsschädlichen Asbestfasern die zulässigen Werte oft weit übersteigt. Zur Sanierung dieser Räume ist es erforderlich, die asbesthaltigen Baustoffe unter strengen Sicherheitsauflagen vollständig zu entfernen und zu entsorgen.

Zur Entsorgung von asbesthaltigen Baustoffen aus Innenräumen von Bauwerken ist es bekannt (DE-GM 88 14 997), den von den Bauwerksteilen abgeschlagenen asbesthaltigen Bauschutt mit Wasser gemischt aus dem abgedichteten Innenraum heraus in einen von einer Vakuumpumpe unter Unterdruck gehaltenen, im Außenraum befindlichen Mischbehälter zu saugen und im Mischbehälter mit Zement als Bindemittel zu mischen. Nach Verschließen der den Innenraum mit dem Mischbehälter verbindenden Saugleitung wird der Mischbehälter zum Außenraum hin geöffnet und das dickflüssige Gemisch aus Bauschutt, Zement und Wasser zum Aushärten in Formwannen gefüllt. Mit Hilfe der luftansaugenden Vakuumpumpe läßt sich jedoch nur eine relativ geringe Förderleistung erzielen, insbesondere wenn bereits der Innenraum unter Unterdruck gesetzt ist oder wenn das Gemisch auf ein höheres Niveau gepumpt werden muß. Am Ausgang der Vakuumpumpe können außerdem Asbestfasern in den Außenraum ausgetragen werden, da die Vermischung mit Wasser alleine nicht ausreicht, die Fasern vollständig zu binden.

Der Erfindung liegt daher die Aufgabe zugrunde, ein Verfahren und eine Vorrichtung zur Entsorgung von mit Schadstoffen kontaminierten Baustoffen aus Innenräumen von Bauwerken zu entwickeln, womit trotz geringem maschinellem Aufwand hohe Entsorgungsleistungen ohne Schadstoffbelastung im Außenraum gewährleistet sind.

Zur Lösung dieser Aufgabe werden erfindungsgemäß die in den Ansprüchen 1 bzw. 12 angegebenen Merkmalskombinationen vorgeschlagen. Vorteilhafte Ausgestaltungen und Weiterbildungen ergeben sich aus den abhängigen Ansprüchen.

Der Erfindung liegt der Gedanke zugrunde, den kontaminierten Bauschutt bereits innerhalb des abgedichteten Innenraums mit dem Bindemittel zu vermischen und beim anschließenden Transport des Gemischs in den Außenraum dafür zu sorgen, daß zu keinem Zeitpunkt eine durchgehende Verbindung zwischen Innenraum und Außenraum entsteht.

Dies wird erfindungsgemäß dadurch erreicht, daß der in den Innenraum eingeschlossene Mischraum vom Innenraum her unter dem dort herrschenden oder gegenüber diesem zusätzlich abgesenkten Druck mit dem trockenen oder befeuchteten kontaminierten Bauschutt befüllt und anschließend während und/oder nach der Bildung des dickflüssigen Gemisches gegenüber dem Innenraum abgedichtet und mit Druckluft beaufschlagt wird und daß das dickflüssige Gemisch unter der Einwirkung der Druckluft über einen den Mischraum mit dem Außenraum verbindenden, gegenüber dem Innenraum druckdicht abgedichteten Kanal in den Außenraum gefördert wird.

Eine bevorzugte Ausgestaltung der Erfindung sieht vor, daß der trockene Bauschutt vorzugsweise im Zuge des Abtrennvorgangs entweder unmittelbar in den Mischraum oder zunächst in ein luftdurchlässiges Behältnis gesaugt wird. Im letzteren Falle kann das Behältnis anschließend zusammen mit dem Bauschutt zerkleinert und im Mischraum mit dem Bindemittel vermischt werden.. Der Bauschutt wird zweckmäßig bereits vor dem Einfüllen in den Mischraum in einem gegenüber dem Mischraum und dem Innenraum abdichtbaren Shredderbereich vorzugsweise auf eine Korngröße unter 8 mm zerkleinert.

Gemäß einer weiteren bevorzugten Ausgestaltung der Erfindung wird der Bauschutt im Mischraum mit Zement oder einem zementhaltigen Bindemittel und Wasser gemischt. Dem Bauschutt können im Mischraum weitere, die Benetzbarkeit des Bauschutts oder die Elastizität der ausgehärteten Blöcke verbessernde Zuschlagsstoffe zugesetzt werden.

Eine weitere bevorzugte Ausgestaltung der Erfindung sieht vor, daß das dickflüssige Gemisch in Form einer Folge von durch Druckluftpolster voneinander getrennten Pfropfen durch den Förderkanal gefördert wird. Die Druckluft für die Gemischförderung wird zweckmäßig aus dem Außenraum angesaugt. Am außenraumseitigen Ende des Förderkanals kann das dickflüssige Gemisch von der Druckluft getrennt und in Folientaschen eingefüllt werden, die nach dem Aushärten des Gemischs verschlossen, vorzugsweise zugeschweißt werden.

Eine Vorrichtung zur Entsorgung von mit Schadstoffen, wie Asbest, kontaminierten, im Innenraum von Bauwerken aufgetragenen Baustoffen in Form von von den Bauwerksteilen abgetrenntem Bauschutt aus dem abgedichteten und vorzugsweise unter Unterdruck gesetzten Innenraum weist vorteilhafterweise einen im abgedichteten Innenraum aufstellbaren, über eine verschließbare Einfüllöffnung mit dem kontaminierten Bauschutt und mit einem aushärtbaren Bindemittel beschickbaren, bei geschlossener Einfüllöffnung mit Druckluft beaufschlagbaren und über eine verschließbare Rohr- oder Schlauchleitung mit dem Außenraum verbindbaren Mischkessel auf, wobei das im Mischkessel gebildete dickflüssige Gemisch aus Bauschutt und Bindemittel unter Einwirkung der Druckluft durch die Rohr- oder Schlauchleitung in den Außenraum transportierbar und dort aushärtbar ist.

Zum Zerkleinern des Bauschutts dient gemäß einer bevorzugten Ausgestaltung der Erfindung ein mit seinem Ausgang in die Einfüllöffnung des Mischkessels mündender Shredder, der eingangsseitig zweckmäßig einen verschließbaren, vorzugsweise mit einer Absaugvorrichtung für Bauschuttreste versehenen Einfülltrichter aufweist. Der oberhalb der Einfüllöffnung des Mischkessels angeordnete Shredder kann mindestens zwei, zwischen dem Einfülltrichter und der Einfüllöffnung angeordnete, mit ineinandergreifenden Messerscheiben versehene, motorisch antreibbare Messerwellen aufweisen.

Zum Zuführen eines körnigen oder pulverförmigen Binde mittelbestandteils, wie beispielsweise Zement, dient zweckmäßig eine zur Einfüllöffnung des Mischkessels führende, vorzugsweise einen Sackentleerer aufweisende, im Innenraum aufstellbare Dosiereinrichtung. Der Sackentleerer kann dabei über einen Schneckenförderer mit der Einfüllöffnung des Mischkessels verbindbar sein. Für die Wasserzufuhr weist der Mischkessel zweckmäßig einen verschließbaren Wasseranschluß auf.

Die zur Förderung des dickflüssigen Gemisches erforderliche Druckluft wird gemäß einer weiteren bevorzugten Ausgestaltung der Erfindung von mindestens einem im Außenraum aufstellbaren, über eine Druckluftleitung mit dem Mischkessel verbindbaren Kompressor erzeugt, dessen Ansaugöffnung im Außenraum angeordnet ist.

Um den Mischkessel gegenüber der zum Außenraum führenden Rohr- oder Schlauchleitung abzudichten, ist vorteilhafterweise ein Absperrorgan zwischen dem Mischkessel und der Rohr- oder Schlauchleitung angeordnet. Zur Trennung von dickflüssigem Gemisch und Druckluft ist am außenraumseitigen Ende der Rohr- oder Schlauchleitung ein Auslaufbock mit Abluftfilter vorgesehen.

Gemäß einer weiteren bevorzugten Ausgestaltung der Erfindung ist der Shredder mittels eines den Mischkessel übergreifenden Fahrgestells über die Einfüllöffnung des Mischkessels verfahrbar und an diese druckdicht anschließbar.

Im folgenden wird die Erfindung anhand eines in der Zeichnung in schematischer Weise dargestellten Ausführungsbeispiels näher erläutert. Es zeigen

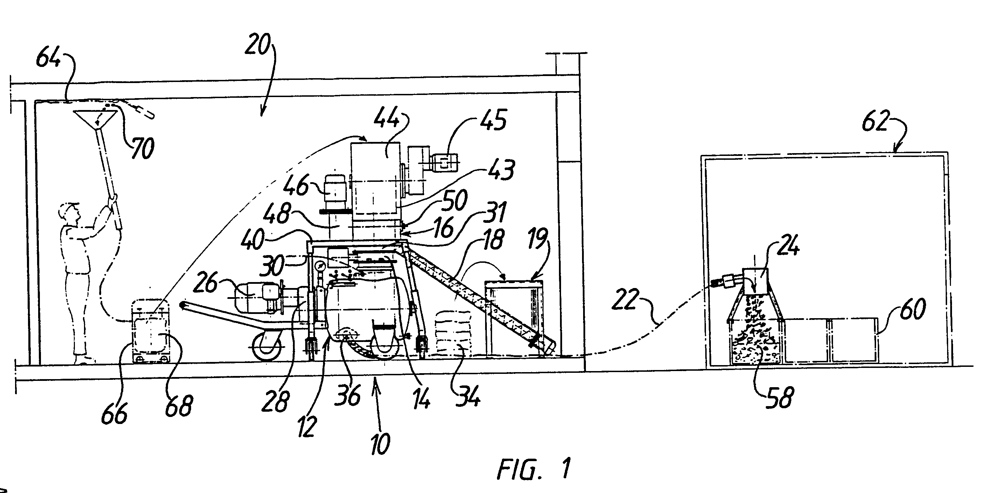

Fig. 1 eine Seitenansicht einer in einem abgedichteten Innenraum aufgestellten Entsorgungsvorrichtung mit außenliegendem Entsorgungscontainer;

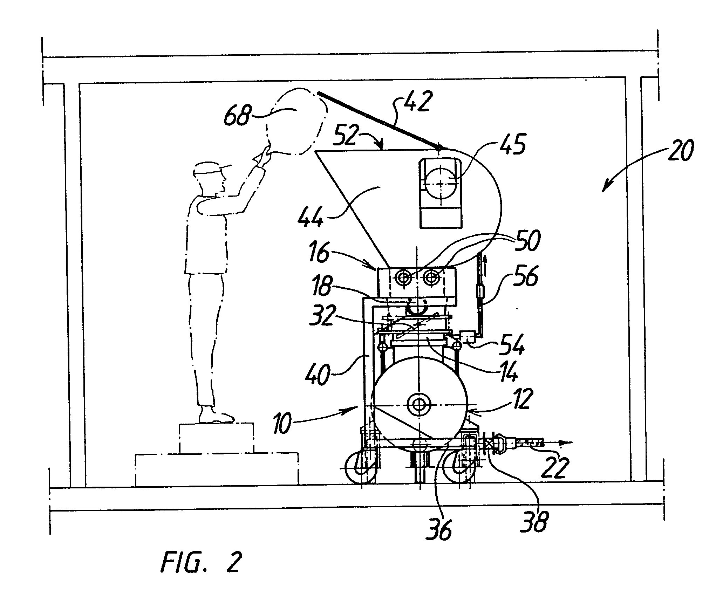

Fig. 2 eine Stirnseitenansicht der Entsorgungsvorrichtung nach Fig. 1.

Die in der Zeichnung dargestellte Anlage ist vor allem zur Entsorgung von asbesthaltigem Bauschutt aus Gebäudeinnenräumen bestimmt. Die Entsorgungsvorrichtung 10 besteht im wesentlichen aus einem Mischkessel 12, einem luftdicht mit einer verschließbaren Einfüllöffnung 14 des Mischkessels 12 verbundenen Shredder 16 zum Zerkleinern des Bauschutts, einem über eine Förderschnecke 18 mit der Einfüllöffnung 14 des Mischkessels 12 verbindbaren Sackentleerer 19, einer vom Mischkessel 12 aus dem abgedichteten Innenraum 20 herausführenden Schlauchleitung 22 sowie einem am Ende der Schlauchleitung 22 angeordneten Auslaufbock 24.

Im Inneren des Mischkessels 12 ist ein nicht dargestelltes, über einen Antriebsmotor 26 und ein Untersetzungsgetriebe 28 angetriebenes Rührwerk angeordnet. Der Mischkessel 12 kann über eine im oberen Bereich des Mischkessels 12 einmündende Leitung 30 mit Druckluft und über einen verschließbaren Anschluß mit Wasser be aufschlagt werden. Die Druckluftleitung 30 führt zu einem nicht dargestellten, außerhalb des Innenraums 20 angeordneten Drucklufterzeuger, dessen Ansaugöffnung sich im Außenraum befindet. Die Beschickung des Mischkessels 12 mit dem kontaminierten Bauschutt erfolgt durch den Shredder 16 hindurch über die mittels einer Drehklappe 32 luftdicht verschließbare Einfüllöffnung 14. Oberhalb der Einfüllöffnung 14 mündet in einen Verbindungskragen 31 die Förderschnecke 18 für den als Bindemittel dienenden Zement, der in Form von Sackware 34 angeliefert wird. Im unteren Bereich des Mischkessels 12 befindet sich eine über ein Absperrventil 38 mit der Schlauchleitung 22 verbundene Austrittsöffnung 36 für das im Mischkessel 12 gebildete dickflüssige Gemisch 58 aus Bauschutt, Zement und Wasser.

Der Shredder 16 kann auf einem höhenverstellbaren Fahrgestell 40 über die Einfüllöffnung 14 des Mischkessels 12 gefahren und dort so weit abgelassen werden, bis er auf dem oberen Flansch des mit der Einfüllöffnung 14 verschraubten Verbindungskragens 31 aufliegt und mit dem Verbindungskragen 31 luftdicht verbunden werden kann. Der Shredder 16 weist einen durch einen Deckel 42 luftdicht verschließbaren, mit einer Eindrückvorrichtung 43 versehenen Einfülltrichter 44 sowie zwei über einen Antriebsmotor 46 und ein Verteilergetriebe 48 antreibbare Messerwellen 50 auf, die mit rechenartig ineinandergreifenden Messerscheiben versehen sind. Die von einem Getriebemotor 45 angetriebene Eindrückvorrichtung 43 drückt während des Shredderbetriebs den im Einfülltrichter 44 befindlichen trockenen Bauschutt nach unten gegen die Messerwellen 50. Das Volumen des Einfülltrichters 44 ist so bemessen, daß die Bauschuttmenge im gefüllten Einfülltrichter 44 mit Bindemittel und Wasser vermischt einer Füllung des Mischkessels 12 entspricht. Eine nicht dargestellte, am Einfülltrichter 44 angeordnete, mit Druckluft betriebene Absaugvorrichtung dient zum Absaugen der Bauschuttreste aus dem Einfülltrichter 44. Eine über ein Ventil 54 verschließbare Entlüftungsleitung 56 verbindet den Einfülltrichter 44 mit dem Mischkessel 12.

Am Austritt der Schlauchleitung 22 ist ein mit stabilen Gummischürzen abgedeckter Auslaufbock 24 zum Einfüllen des dickflüssigen Gemischs 58 in Formwannen 60 sowie zur Trennung von Gemisch und Druckluft angeordnet. Mittels eines nicht dargestellten Schalters in der Nähe des Auslaufbocks 24 läßt sich die Druckluftleitung 30 verschließen, so daß die Förderung des dickflüssigen Gemischs 58 zum Umsetzen des Auslaufbocks 24 oder der Formwannen 60 unterbrochen werden kann. Die Formwannen 60 sind mit Folientaschen ausgeschlagen, welche nach dem Aushärten des Gemischs 58 zugeschweißt werden und die ausgehärteten Blöcke beim Transport zur Deponie umschließen. Das Einfüllen des dickflüssigen Gemisches 58 in die Formwannen 60 erfolgt bei dem gezeigten Ausführungsbeispiel aus Sicherheitsgründen innerhalb eines abgedichteten Entsorungscontainers 62, dessen Innenraum an eine nicht dargestellte Absaug- und Filteranlage angeschlossen ist.

Um den mit Asbestfasern kontaminierten Innenraum 20 eines Bauwerks zu sanieren, werden vor Beginn der Sanierungsarbeiten die Entsorgungsvorrichtung 10 sowie ausreichend Zementsäcke 34 in den Innenraum 20 transportiert. Die einzelnen Bauteile der Entsorgungsvorrichtung 10, d.h. der Mischkessel 12, der Shredder 16 und der Sackentleerer 19 sind so dimensioniert, daß sie sich durch normal große Zimmertüren transportieren lassen. Nach dem Zusammenbau der Entsorgungsvorrichtung 10 und dem Verlegen der Schlauchleitung 22, der Druckluftleitung 30 und des Wasseranschlusses wird der Innenraum 20 bzw. ein gesamtes Stockwerk des Gebäudes gegenüber dem Außenraum hermetisch abgedichtet und mittels einer Vakuum- und Filteranlage unter Unterdruck gehalten, so daß keine Asbestfasern aus dem Innenraum 20 entweichen können.

Zum Entfernen der auf Bauwerksteilen aufgetragenen asbesthaltigen Baustoffe 64 werden diese stückweise von ihrer Unterlage abgekratzt oder abgeschlagen, wobei der herabfallende Bauschutt 70 sofort mit einem Industriestaubsauger 66 aufgesaugt wird, um den Fasergehalt der Raumluft möglichst niedrig zu halten. Die vollen Papierfiltersäcke 68 werden aus dem Staubsauger 66 entnommen und über die Trichteröffnung 52 in den Einfülltrichter 44 des Shredders 16 geworfen. Größere asbesthaltige Baustoffplatten oder Baustoffstücke können direkt in den Einfülltrichter 44 verbracht werden.

Sobald der Einfülltrichter 44 gefüllt ist, wird der Deckel 42 luftdicht verschlossen und die Entsorgungsvorrichtung 10 in Betrieb gesetzt. Dabei öffnet eine automatische Steuerung den Wasseranschluß und gegebenenfalls eine Zusatzmitteldosierung und schaltet die Antriebsmotoren 24,46 und 45 des Rührwerks, des Shredders und der Eindrückvorrichtung sowie den Antrieb der Förderschnecke 18 ein. Vor dem Anlaufen des Shredders 16 wird automatisch der Deckel 42 des Einfülltrichters 44 in seiner geschlossenen Stellung verriegelt. Im zuvor gefüllten Sackentleerer 19 befindet sich eine für die Einbettung der Bauschuttmenge des vollen Einfülltrichters 44 ausreichende Menge Zement.

Die im Einfülltrichter liegenden gefüllten Papierfiltersäcke 68 werden von der Eindrückvorrichtung 43 gegen die sich drehenden Messerwellen 50 gedrückt und von den Messerscheiben des Shredders 16 zerkleinert. Die zerkleinerten Baustoffstücke fallen durch die geöffnete Drehklappe 32 über die Einfüllöffnung 14 in den Mischkessel 12 und werden dort mit Wasser und Zement unter Bildung eines dickflüssigen Gemischs 58 gemischt.

Nach Ablauf einer vorgegebenen Mischzeit wird durch die Steuerung der Antriebsmotor 46 des Shredders 16 und der Antrieb der Förderschnecke 18 abgeschaltet, die Drehklappe 32 der Einfüllöffnung 14 des Mischkessels 12 Luftdicht verschlossen, die Wasserzufuhr abgestellt, der Mischkessel 12 durch Öffnen der Druckluftleitung 30 mit Druckluft beaufschlagt und das Absperrventil 38 ge öffnet. Das dickflüssige Gemisch 58 wird in Form von durch Druckluftpolster unterbrochenen Pfropfen durch die Schlauchleitung 22 zum Auslaufbock 24 gefördert. Dort entweicht die Druckluft durch einen aufgesetzten Filtersack und das dickflüssige Gemisch 58 fällt nach unten in eine der mit Kunststoffolie ausgeschlagenen Formwannen 60, in der es nach Auffüllen der Formwanne aushärtet. Zum Umsetzen des Auslaufbocks 24 nach dem Auffüllen einer Formwanne 60 wird die Schlauchleitung 22 am Auslaufbock 24 mit Hilfe eines Kugelsperrhahns verschlossen und erforderlichenfalls die Druckluftzufuhr zum Mischkessel 12 über die Druckluftleitung 30 abgestellt.

Sobald der Mischkessel 12 leergefördert ist, sinkt der Luftdruck am Ausgang der Druckluftleitung 30 im Mischkessel 12 ab und löst über einen auf die Steuerung der Entsorgungsvorrichtung 10 einwirkenden Druckgeber das Schließen des Absperrventils 38 aus. Gleichzeitig wird die Druckluftzufuhr zum Mischkessel 12 unterbrochen, das Ventil 54 in der Entlüftungsleitung 56 zwischen Mischkessel 12 und Einfülltrichter 44 geöffnet, die Absaugeinrichtung des Einfülltrichters 44 eingeschaltet und die Drehklappe 32 der Einfüllöffnung 14 des Mischkessels 12 erneut geöffnet. Nach Ablauf einer vorgegebenen Absaugzeit wird die Absaugeinrichtung des Einfülltrichters 44 abgeschaltet und der Verschluß des Deckels 42 entriegelt. Anschließend kann der Deckel 42 geöffnet und erneut Bauschutt in den Einfülltrichter 44 eingefüllt werden.

Eine Sicherheitsschaltung in der Steuerung der Entsorgungsvorrichtung 10 gewährleistet, daß sich der Deckel 42 des Einfülltrichters 44 erst dann öffnen läßt, wenn die Messerwellen 50 des Shredders 16 stillstehen und die Bauschuttreste aus dem Einfülltrichter 44 abgesaugt sind. Umgekehrt läßt sich der Antriebsmotor 46 des Shredders erst dann einschalten, wenn der Deckel 42 des Einfülltrichters 44 vollständig geschlossen ist.

Eine Reinigung der Entsorgungsvorrichtung 10 während des Betriebs ist nicht erforderlich. Im Mischbehälter 12 und an den Wänden der Schlauchleitung 22 wird nur sehr wenig Gemisch abgeschieden, so daß es ausreicht, am Abend vor Beendigung der Arbeiten einen aus Gummischwamm bestehenden benetzten Ball mit Druckluft durch die Schlauchleitung 22 zu drücken, anschließend die Letzte Charge Baustoff ohne Zementzusatz nur mit Wasser zu mischen und sie bei geschlossenem Absperrventil 38 über Nacht im Mischkessel 12 zu belassen.

Bei Arbeitsbeginn am nächsten Tag wird dem im Mischkessel 12 befindlichen Bauschutt-Wasser-Gemisch zunächst Zement und Restwasser zugesetzt und dann das fertige Gemisch durch die Schlauchleitung 22 gefördert.

Nach Abschluß der Sanierungsarbeiten wird die Anlage gereinigt. Dazu wird die Vorrichtung 10 an ihrer gesamten Oberfläche abgesaugt und nach dem Abfördern der letzten asbesthaltigen Charge das Innere des Mischkessels mit Wasser und Sand gereinigt, wobei diesem Wasser-Sand-Gemisch in den Formwannen 60 Zement zugegeben wird um wieder ein deponiefähiges Gemisch zu erhalten. Der Förderschlauch 22 wird nochmals mit dem Schaumgummiball gereinigt, hinter dem Absperrventil 38 abgenommen und beidseitig mit Verschlußkappen versehen. Vor dem Abtransport wird die Anlage in transportfähige Baugruppen zerlegt, die mit einem Faserbindemittel eingesprüht oder in Kunststoffolie verpackt werden, so daß der Außenraum nicht kontaminiert werden kann.

## Ansprüche

1. Verfahren zur Entsorgung von mit Schadstoffen, wie Asbest, kontaminierten, im Innenraum von Bauwerken vorzugsweise schichtweise auf Teilen des Bauwerks aufgetragenen Baustoffen, beispielsweise Spritzasbest, bei welchem der Innenraum gegenüber einem den Innenraum umgebenden Außenraum abgedichtet und vorzugsweise unter Unterdruck gesetzt wird, die kontaminierten Baustoffe sodann von den Bauwerksteilen getrennt werden, der dabei gebildete Bauschutt, gegebenenfalls nach vorheriger Zerkleinerung, in einem gegenüber dem Innenraum und dem Außenraum abdichtbaren Mischraum unter Bildung eines dickflüssigen Gemischs mit einem Bindemittel gemischt wird und das dickflüssige Gemisch aus dem Mischraum in den Außenraum entleert und vorzugsweise unter Bildung transportierbarer Blöcke ausgehärtet wird, **dadurch gekennzeichnet**, daß der in den Innenraum eingeschlossene Mischraum vom Innenraum her unter dem dort herrschenden oder gegenüber diesem zusätzlich abgesenkten Druck mit dem kontaminierten Bauschutt befüllt und anschließend während und/oder nach der Bildung des dickflüssigen Gemisches gegenüber dem Innenraum abgedichtet und mit Druckluft beaufschlagt wird, und daß das dickflüssige Gemisch unter der Einwirkung der Druckluft über einen den Mischraum mit dem Außenraum verbindenden, gegenüber dem Innenraum druckdicht abgedichteten Kanal in den Außenraum gefördert wird.

2. Verfahren nach Anspruch 1, **dadurch gekennzeichnet**, daß der Bauschutt vorzugsweise im Zuge des Abtrennens von den Bauwerksteilen in ein Luftdurchlässiges Behältnis, beispielsweise in einen Filtersack, gesaugt und anschließend zusammen mit dem Behältnis zerkleinert und im Mischraum mit dem Bindemittel vermischt wird.

3. Verfahren nach Anspruch 1, **dadurch gekennzeichnet**, daß der Bauschutt vorzugsweise im Zuge des Abtrennens von den Bauwerksteilen unmittelbar in den Mischraum gesaugt wird.

4. Verfahren nach einem der Ansprüche 1 bis 3, **dadurch gekennzeichnet**, daß der Bauschutt vor dem Einfüllen in den Mischraum vorzugsweise auf eine Korngröße unter 8 mm zerkleinert wird.

5. Verfahren nach einem der Ansprüche 1 bis 4, **dadurch gekennzeichnet**, daß der Bauschutt in einem gegenüber dem Mischraum und dem Innenraum abdichtbaren Shredderbereich zerkleinert wird.

6. Verfahren nach einem der Ansprüche 1 bis 5, **dadurch gekennzeichnet**, daß das dickflüssige Gemisch in Form einer Folge von durch Druckluftpolster voneinander getrennten Pfropfen durch den Förderkanal transportiert wird.

7. Verfahren nach einem der Ansprüche 1 bis 6, **dadurch gekennzeichnet**, daß die Druckluft für die Gemischförderung aus dem Außenraum angesaugt wird.

8. Verfahren nach einem der Ansprüche 1 bis 7, **dadurch gekennzeichnet**, daß das dickflüssige Gemisch am außenraumseitigen Ende des Förderkanals von der Druckluft getrennt wird.

9. Verfahren nach einem der Ansprüche 1 bis 8, **dadurch gekennzeichnet**, daß das dickflüssige Gemisch im Außenraum in Folientaschen gefüllt wird und daß die Folientaschen nach dem Aushärten des Gemischs verschlossen, vorzugsweise zugeschweißt werden.

10. Verfahren nach einem der Ansprüche 1 bis 9, **dadurch gekennzeichnet**, daß der Bauschutt im Mischraum mit Zement oder einem zementhaltigen Bindemittel und Wasser gemischt wird.

11. Verfahren nach Anspruch 10, **dadurch gekennzeichnet**, daß dem Bauschutt im Mischraum weitere, die Benetzbarkeit des Bauschutts oder die Elastizität der ausgehärteten Blöcke verbessernde Zuschlagstoffe zugesetzt werden.

12. Vorrichtung zur Entsorgung von mit Schadstoffen, wie Asbest, kontaminierten, im Innenraum von Bauwerken vorzugsweise schichtweise auf Teilen des Bauwerks aufgetragenen Baustoffen, beispielsweise Spritzasbest, in Form von von den Bauwerksteilen abgetrenntem Bauschutt aus dem gegenüber einem umgebenden Außenraum abgedichteten und vorzugsweise unter Unterdruck gesetzten Innenraum, zur Durchführung des Verfahrens nach einem der Ansprüche 1 bis 11, **gekennzeichnet durch** einen im abgedichteten Innenraum (20) aufstellbaren, über eine verschließbare Einfüllöffnung (14) mit dem kontaminierten Bauschutt (70) und mit einem aushärtbaren Bindemittel beschickbaren, bei geschlossener Einfüllöffnung (14) mit Druckluft beaufschlagbaren und über eine verschließbare Rohr- oder Schlauchleitung (22) mit dem Außenraum verbindbaren Mischkessel (12) , wobei das im Mischkessel (12) gebildete dickflüssige Gemisch (58) aus Bauschutt (70) und Bindemittel unter Einwirkung der Druckluft durch die Rohr- oder Schlauchleitung (22) in den Außenraum transportierbar und dort aushärtbar ist.

13. Vorrichtung nach Anspruch 12, **gekennzeichnet durch** einen in die Einfüllöffnung (14) des Mischkessels (12) mündenden Shredder (16) zum Zerkleinern des Bauschutts (70).

14. Vorrichtung nach Anspruch 13, **dadurch gekennzeichnet**, daß der Shredder (16) eingangsseitig einen verschließbaren, vorzugsweise mit einer Absaugvorrichtung für Bauschuttreste versehenen Einfülltrichter (44) aufweist.

15. Vorrichtung nach Anspruch 14, **dadurch gekennzeichnet**, daß der oberhalb der Einfüllöffnung (14) des Mischkessels (12) angeordnete Shredder (16) mindestens zwei zwischen dem Einfülltrichter (44) und der Einfüllöffnung (14) angeordnete, mit ineinandergreifenden Messerscheiben versehene, motorisch antreibbare Messerwellen (50) aufweist.

16. Vorrichtung nach einem der Ansprüche 12 bis 15, **gekennzeichnet durch** mindestens eine zur Einfüllöffnung (14) des Mischkessels (12) führende, im Innenraum aufstellbare Dosiereinrichtung für einen Bindemittelbestandteil.

17. Vorrichtung nach Anspruch 16, **dadurch gekennzeichnet**, daß die Dosiereinrichtung zum Zudosieren eines körnigen oder pulverförmigen Bindemittelbestandteils, insbesondere einen über einen Schneckenförderer (18) mit der Einfüllöffnung (14) des Mischkessels verbindbaren Sackentleerer (19) aufweist.

18. Vorrichtung nach einem der Ansprüche 12 bis 17, **dadurch gekennzeichnet**, daß der Mischkessel (12) einen verschließbaren Wasseranschluß aufweist.

19. Vorrichtung nach einem der Ansprüche 12 bis 18, **gekennzeichnet durch** mindestens einen vorzugsweise im Außenraum aufstellbaren, über eine Druckluft leitung (30) mit dem Mischkessel (12) verbindbaren Drucklufterzeuger mit einer im Außenraum angeordneten Ansaugöffnung.

20. Vorrichtung nach einem der Ansprüche 12 bis 19, **gekennzeichnet durch** ein zwischen dem Mischkessel (12) und der Rohr- oder Schlauchleitung (22) angeordnetes Absperrorgan (38).

21. Vorrichtung nach einem der Ansprüche 14 bis 20, **gekennzeichnet durch** eine verschließbare Entlüftungsleitung (56) zwischen dem Mischkessel (12) und dem Einfülltrichter (44) des Shredders (16).

22. Vorrichtung nach einem der Ansprüche 12 bis 21, **dadurch gekennzeichnet**, daß am außenraumseitigen Ende der Rohr- oder Schlauchleitung (22) ein AusLaufbock (24) zur Trennung von dickflüssigem Gemisch (58) und Druckluft angeordnet ist.

23. Vorrichtung nach einem der Ansprüche 12 bis 22, **dadurch gekennzeichnet**, daß der Shredder (16) mittels eines den Mischkessel 812) übergreifenden Fahrgestells (40) über die Einfüllöffnung (14) des Mischkessels (12) verfahrbar und an diese druckdicht anschließbar ist.

FIG. 1

A 52 984

Putzmeister-Werk Maschinenfabrik GmbH, 7447 Aichtal 2

Patentanwalt Dr.-Ing. Eckhard Wolf, 7000 Stuttgart 1

FIG. 2

A 52 984